# EUROPÄISCHE PATENTSCHRIFT

(11) **EP 2 792 646 B1**
(45) Veröffentlichungstag und Bekanntmachung des Hinweises auf die Patenterteilung: **27.05.2015**
(21) Anmeldenummer: 13401040.4
(22) Anmeldetag: 16.04.2013
(51) Int. Cl.: C02F 3/12, C02F 3/30, C02F 1/38

(54) **Verfahren und Anlage zur Behandlung von ammoniumhaltigem Abwasser**
Method and system for treating waste water containing ammonium
Procédé et installation de traitement d'eaux usées contenant de l'ammonium

(43) Veröffentlichungstag der Anmeldung: 22.10.2014
(73) Patentinhaber: Demon GmbH, 8737 Gommiswald (CH)
(72) Erfinder:
(74) Vertreter: Scheffler, Jörg

(56) Entgegenhaltungen:
- EP-B1- 2 163 524
- DE-A1- 10 023 009

## Beschreibung

Die Erfindung betrifft ein Verfahren zur Behandlung von ammoniumhaltigem Abwasser in einer zumindest ein Belebungsbecken aufweisenden deammonifizierenden Anlage, bei welchem zunächst mittels aerob oxidierender Bakterien (AOB) Ammonium zu Nitrit umgesetzt wird und anschließend mittels anaerob Ammonium oxidierender Bakterien (Anammox), insbesondere mittels Planctomyceten, Ammonium und Nitrit in elementaren Stickstoff umgesetzt werden und bei welchem Schlamm aus dem Belebungsbecken einem Hydrozyklon zugeführt und in diesem in eine spezifisch schwere Fraktion, welche mehrheitlich die anaerob Ammonium oxidierenden Bakterien (Anammox) enthält, und in eine spezifisch leichte Fraktion separiert wird, wobei die spezifisch schwere Fraktion in das Belebungsbecken zurückgeführt wird.

Weiterhin betrifft die Erfindung eine deammonifizierende Anlage zur Behandlung von ammoniumhaltigem Abwasser mit zumindest einem Belebungsbecken und mit zumindest einem Hydrozyklon zur Separierung von Schlamm aus dem Belebungsbecken in eine spezifisch schwere Fraktion, welche mehrheitlich anaerob Ammonium oxidierende Bakterien (Anammox) enthält, und in eine spezifisch leichte Fraktion, wobei der Hydrozyklon einen strömungstechnisch mit dem Belebungsbecken verbundenen Zulauf zur Einleitung des Schlammes, einen strömungstechnisch mit dem Belebungsbecken verbundenen Unterlauf zur Rückführung der separierten spezifisch schweren Fraktion in das Belebungsbecken und einen Oberlauf zum Abführen der separierten spezifisch leichten Fraktion aus dem Hydrozyklon aufweist.

Das Belebtschlammverfahren ist ein Verfahren zur biologischen Abwasserreinigung in Kläranlagen. Dabei wird das zumeist kommunale Abwasser durch die Stoffwechsel-Aktivität von aeroben chemoorganoheterotrophen Mikroorganismen, dem sogenannten Belebtschlamm, weitestgehend von organischen Verunreinigungen befreit, also gereinigt. Das Verfahren setzt nach der Abtrennung bzw. Abscheidung der Grobanteile ein, die entwässert, separiert, ausgefault und verbrannt werden. Für kommunale Abwässer gehört dieses Verfahren zu den klassischen intensiven Aufbereitungsverfahren. Vorteilhaft ist die allgemeine Verwendbarkeit und die gute Reinigungswirkung für Abwässer zur Verminderung der Gehalte an Schwebstoffen, dem Chemischen Sauerstoffbedarf (CSB), dem Biochemischen Sauerstoffbedarf (BSB₅) und den Stickstoffverbindungen (N).

Anlagen nach dem Belebtschlammverfahren können sowohl kontinuierlich, d. h. im Durchlaufbetrieb (konventionelle Belebungsanlage), als auch diskontinuierlich (SBR-Anlage) betrieben werden. Weiterhin existieren auch noch sogenannte Membranbelebungsanlagen, bei welchen mittels einer Membran das gereinigte Wasser vom Schlamm abgetrennt wird. Gemein ist allen Varianten, dass im Wasser suspendierte Bakterienmasse oder Biomasse, welche auch als Belebtschlamm bezeichnet wird, die biologische Reinigung des Abwassers übernimmt. Hierzu weist jede Anlage zumindest ein Belebungsbecken auf, in welchem das Abwasser mit dem Belebtschlamm versetzt und damit in einen intensiven Kontakt mit dem Belebtschlamm gebracht wird.

Als Belebtschlamm wird die bei der aeroben biologischen Abwasserreinigung durch den Abbau der Abwasserinhaltsstoffe im Belebungsbecken gebildete Biomasse bezeichnet. Sie besteht im Wesentlichen aus Bakterien, Pilzen, Protozoen, EPS und weiteren Bestandteilen. Mikroskopische Untersuchungen belegen, dass Belebtschlammflocken von Bakterien und Protozoen "belebt" sind. Deshalb werden sie Belebtschlamm genannt. Der Belebtschlamm liegt bei der technischen Nutzung im Belebtschlammverfahren in der Regel in Form von Belebtschlammflocken vor, die neben lebender und toter Biomasse adsorbierte und eingelagerte organische Verbindungen und Mineralstoffe enthalten.

Beim Belebtschlammverfahren erfolgt nach dem Abbau der Schadstoffe im Abwasser durch Belebtschlamm eine Trennung dieses Schlammes vom gereinigten Wasser in der sogenannten Nachklärung. Ein Großteil des abgetrennten Schlammes wird in das Belebungsbecken als Rücklaufschlamm oder Rezirkulationsschlamm zurückgeführt. Dadurch wird sichergestellt, dass die Belebtschlammkonzentration im Belebungsbecken aufrecht gehalten werden kann. Die im Rücklaufschlamm enthaltenen belebten Flocken erneuern die Reinigungskraft der Belebung. Der nicht rezirkulierte, kleinere Volumenstrom des Belebtschlammes wird Überschussschlamm genannt. Der Überschussschlamm ist also der Teil des Belebtschlammes, der zur Konstanthaltung der gewünschten Biomassenkonzentration abgezogen und in die Schlammbehandlung gepumpt wird. Dieser entfernte Biomassenzuwachs wird in der Regel zusammen mit dem Primärschlamm der Schlammfaulung und schließlich der Schlammentwässerung zugeführt.

In herkömmlichen Kläranlagen wird heute fast ausschließlich die biologische Nitrifikation/Denitrifikation zur Stickstoffelimination eingesetzt. Unter Stickstoffelimination versteht man die Umwandlung von biologisch verfügbaren Stickstoffverbindungen wie Ammonium (NH₄), Nitrit (NO₂) und Nitrat (NO₃) zu elementarem Stickstoff (N₂), welcher als harmloses Endprodukt in die Umgebungsluft ausgast. Bei der Nitrifikation wird Ammonium durch Sauerstoff über das Zwischenprodukt Nitrit zu Nitrat oxidiert. Bei der anschließenden Denitrifikation wird das Nitrat in einem ersten Reduktionsschritt zu Nitrit und in einem zweiten Reduktionsschritt zu Stickstoff reduziert.

Die biologische Nitrifikation/Denitrifikation hat den Nachteil eines hohen Sauerstoffbedarfs und damit hohen Energieverbrauchs. Zudem wird bei der Denitrifikation organischer Kohlenstoff verbraucht, was sich nachteilig auf den weiteren Reinigungsprozess und die Schlammeigenschaften auswirkt.

Gegenüber der Nitrifikation/Denitrifikation wird bei der Deammonifikation nur 40 % des Sauerstoffes benötigt bzw. der Energieverbrauch für die Stickstoffelimination um 60 % reduziert. Die Deammonifikation ist ein autotropher Prozess, bei dem kein organischer Kohlenstoff benötigt wird. Damit wird der übrige Reinigungsprozess stabiler.

Die Deammonifikation ist ein effizientes Verfahren zur biologischen Stickstoffelimination, z.B. auch bei Abwässern mit hohen Ammoniumkonzentrationen. Bei der biologischen Deammonifikation mit suspendierter Biomasse sind zwei Bakteriengruppen beteiligt, einerseits die aerob Ammonium oxidierenden Bakterien (AOB), welche Ammonium zu Nitrit umsetzen, und andererseits die anaerob Ammonium oxidierenden und elementaren Stickstoff produzierenden Bakterien (Anammox), insbesondere Planctomyceten, welche diesen Schritt mithilfe des zuvor produzierten Nitrits vollziehen.

Die aerob Ammonium oxidierenden Bakterien (AOB) produzieren bezogen auf den Stoffumsatz zehnmal mehr neue Bakterienmasse als die anaerob Ammonium oxidierenden Bakterien (Anammox). Die Aufenthaltszeit des Schlammes im Ein-Schlamm-System muss also mindestens so lang sein, dass sich die langsamwüchsigen anaerob Ammonium oxidierenden Bakterien (Anammox) anreichern können.

Verfahren zur einstufigen bzw. zweistufigen Deammonifikation sind bereits hinlänglich bekannt, beispielsweise aus der WO 2007/033393 A1 oder der EP 0 327 184 B1.

Als nachteilig erweisen sich hierbei insbesondere die wesentlich längeren Generationszeiten der anaerob Ammonium oxidierenden Bakterien (Anammox), welche um den Faktor 10 länger als die der aerob Ammonium oxidierenden Bakterien (AOB) sind. Dadurch kann sich ein stabiles System nur dann ausbilden, wenn die Aufenthaltszeit des Schlammes bzw. der Bakterien im Becken ausreichend groß ist. Dies bedingt wiederum große Reaktionsvolumina und entsprechend ausgebildete Becken.

Weiterhin ist eine ausreichend hohe Abwassertemperatur (> 25 °C) Grundlage für die Existenz bzw. das Wachstum der anaerob Ammonium oxidierenden Bakterien (Anammox). Das Aufheizen des Abwassers ist energetisch jedoch sehr aufwendig, weshalb die beschriebenen Verfahren bei Abwässern mit niedrigen Temperaturen nicht wirtschaftlich einsetz- bzw. durchführbar sind.

Außerdem erweist sich die Anwesenheit von solchen Bakteriengruppen (NOB) als nachteilig, welche das gebildete Nitrit unter aeroben Bedingungen in Nitrat umwandeln. Diese Gruppe Bakterien hat gegenüber den anaerob Ammonium oxidierenden Bakterien (Anammox) um den Faktor 10 kürzere Generationszeiten. Zum Ausgleich dieser unterschiedlichen Generationszeiten ist bereits daran gedacht worden, die belüftete Phase des Ein-Schlamm-Systems auf einem sehr niedrigen Sauerstoffniveau zu betreiben (< 0,4 mg O₂/l). Hierdurch steht den Nitrat bildenden Bakterien (NOB) kein bzw. wenig Sauerstoff zur Umsetzung des Nitrits zur Verfügung, was wiederum für die anaerob Ammonium oxidierenden Bakterien (Anammox) sehr vorteilhaft ist. Die reduzierte Sauerstoffzufuhr während der belüfteten Phase hat jedoch den Nachteil, dass auch die aerobe Umwandlung des Ammoniums in Nitrit sauerstofflimitiert ist und dadurch sehr langsam verläuft.

Die langsamwüchsigen Planctomyceten, welche gegenüber den Nitrit bildenden Bakterien (AOB) eine um den Faktor 10 längere Generationszeit haben, weisen die besondere Eigenschaft auf, dass sehr viele Einzelbakterien einen kugelförmigen Verbund, sogenannte Planctomyceten-Granulen bilden. Diese Planctomyceten-Granulen haben eine sehr große Dichte (10¹⁰ Bakterien/ml).

Das zu behandelnde Abwasser enthält neben dem abzubauenden Ammonium organische Stoffe wie organische Säuren und weitere organische Stoffe, die mit dem Summenparameter "gelöster CSB" beschrieben werden und Werte von einigen Hundert mg/l betragen können (typisch: 100 - 2000 mg/l). Diese organischen Stoffe werden von sehr schnellwüchsigen heterotrophen Bakterien abgebaut. Die heterotrophen Bakterien siedeln sich häufig auf den Planctomyceten-Granulen an und bedecken diese mit einer organischen Deckschicht bzw. einem Belag. Die Deckschicht führt zu einer Diffusionsbegrenzung und erschwert dadurch die Umwandlung von Ammonium (NH₄) und Nitrit (NO₂) in elementaren Stickstoff (N₂), da das Substrat (NH₄ und NO₂) erst diese Deckschicht passieren muss, bevor es den Planctomyceten für die Umwandlung zur Verfügung steht.

Das zu behandelnde Abwasser, häufig Abwasser aus einer Schlammfaulung (anaerobe Stabilisierung von Klärschlamm) oder generell Abwasser mit erhöhten Stickstoffkonzentrationen, enthält neben Ammonium (NH₄) und organischen abbaubaren Stoffen auch anorganische Stoffe, wie beispielweise Calciumcarbonat und/oder Struvit, welche sich ebenfalls an der Oberfläche der Plantomyceten-Granulen ablagern können. Auch im Abwasser enthaltene Schwebestoffe, die einige Hundert mg/l (typisch 50 - 1000 mg/l) betragen können, bilden oder vergrößern die Deckschicht der Planctomyceten-Granulen.

Die Überdeckung der Planctomyceten-Granulen führt infolge der Diffusionsbegrenzung zu einem massiven Leistungseinbruch der deammonifizierenden Anlage. Vergleichsmessungen zwischen freien, unbedeckten Planctomyceten-Granulen und Granulen mit einer Deckschicht haben einen Unterschied im spezifischen Umsatz von Stickstoff (mg N/g TS) um den Faktor 4 - 6 gezeigt.

Die Ablagerungen bzw. der Belag auf den Planctomyceten-Granulen sind bereits mit bloßem Auge erkennbar. Freie, unbedeckte Granulen sind intensiv rot/rostrot, die mit einem Belag bedeckten Granulen sind je nach Bedeckungsgrad schwach rötlich/braun bis dunkelbraun.

Aus der EP 2 163 524 B1 sind bereits ein Verfahren und eine deammonifizierende Anlage der eingangs genannten Art bekannt. Bei dem offenbarten Verfahren wird der zur Konstanthaltung der Biomassekonzentration in der Anlage aus dieser abgezogene Überschussschlamm nicht entsorgt und der Schlammfaulung zugeführt, sondern einem Hydrozyklon zugeführt und in diesem in eine spezifisch schwere Fraktion (Unterlauf) und eine spezifisch leichte Fraktion (Oberlauf) getrennt. Hierbei werden die Dichteunterschiede der im Überschussschlamm enthaltenen beiden Bakteriengruppen (Anammox/AOB) genutzt, um den Überschussschlamm in eine schwere Phase, welche mehrheitlich die anaerob Ammonium oxidierenden Bakterien (Anammox) enthält, und eine leichte Phase (AOB) zu trennen. Durch die Rückführung der in der schweren Phase enthaltenen Bakteriengruppe (Anammox) in das Belebungsbecken der Anlage wird die langsamwüchsige Bakteriengruppe (Anammox) in dem Belebungsbecken angereichert.

Die beiden zu trennenden Schlammfraktionen, nämlich die spezifisch leichte Fraktion und die spezifisch schwere Fraktion, unterscheiden sich sowohl in der Dichte als auch der biologischen Charakteristik deutlich. Es handelt sich um völlig verschiedene Gruppen von Bakterien. Die aus mehreren Einzelbakterien bestehenden Planctomyceten-Granulen weisen gegenüber den flockenartig vorliegenden aerob Ammonium oxidierenden Bakterien (AOB) eine wesentlich größere Dichte auf. Durch die vorhandenen Dichteunterschiede der beiden Bakteriengruppen lässt sich der abgeführte Überschussschlamm in eine schwere, die Planctomyceten-Granulen enthaltende Phase und eine leichte, den flockenartigen Schlammanteil enthaltende Phase trennen. Die Planctomyceten-Granulen sind aufgrund der Dichteunterschiede erheblich schwerer als die Flocken.

Der Erfindung liegt die Aufgabe zugrunde, ein verbessertes Verfahren zur Behandlung von ammoniumhaltigem Abwasser zur Verfügung zu stellen. Weiterhin liegt der Erfindung die Aufgabe zugrunde, eine verbesserte deammonifizierende Anlage zur Behandlung von ammoniumhaltigem Abwasser zur Verfügung zu stellen.

Die erstgenannte Aufgabe wird erfindungsgemäß mit einem Verfahren gemäß den Merkmalen des Anspruches 1 gelöst. Die weitere Ausgestaltung der Erfindung ist den Unteransprüchen 2 bis 7 zu entnehmen.

Erfindungsgemäß ist also ein Verfahren zur Behandlung von ammoniumhaltigem Abwasser vorgesehen, bei welchem zumindest zeitweise Belebtschlamm aus dem Belebungsbecken in den Hydrozyklon eingeleitet wird und bei welchem nach der Separierung des Belebtschlammes im Hydrozyklon sowohl die spezifisch schwere Fraktion als auch die spezifisch leichte Fraktion, welche mehrheitlich die aerob Ammonium oxidierenden Bakterien (AOB) enthält, wieder in das zumindest eine Belebungsbecken der Anlage zurückgeführt werden, wobei während der Separierung des Belebtschlammes im Hydrozyklon die gegenüber den aerob Ammonium oxidierenden Bakterien (AOB) eine größere Dichte aufweisenden anaerob Ammonium oxidierenden Bakterien (Anammox) durch die Flieh- und Strömungskräfte im Hydrozyklon an einer aufgerauten Innenwandfläche des Hydrozyklons abgeschieden werden und durch eine Relativbewegung zwischen den sich schnell bewegenden anaerob Ammonium oxidierenden Bakterien (Anammox) und der ortsfesten aufgerauten Innenwandfläche des Hydrozyklons abrasive Kräfte erzeugt werden, durch welche ein sich auf den Ammonium oxidierenden Bakterien (Anammox), insbesondere Planctomyceten-Granulen, vorhandener organischer oder anorganischer Belag zumindest teilweise entfernt wird.

Hierdurch wird ein verbessertes Verfahren zur Behandlung von ammoniumhaltigem Abwasser zur Verfügung gestellt, da eine Umsetzung von Ammonium und Nitrit in elementaren Stickstoff durch die anaerob Ammonium oxidierenden Bakterien (Anammox) dadurch erleichtert wird, dass der eine Diffusionsbegrenzung darstellende organische oder anorganische Belag auf den als Planctomyceten-Granulen vorliegenden anaerob Ammonium oxidierenden Bakterien (Anammox) entfernt wird. Dabei wird der Belag so schonend von den Granulen abgetragen bzw. abgewaschen, dass die Granulen selbst durch die abrasiven Kräfte nicht zerstört werden. Das Erhalten der granulatartigen Struktur ist für den angestrebten Stickstoff-umsatz der Anlage von elementarer Bedeutung. Dadurch, dass sowohl die spezifisch schwere Fraktion als auch die spezifisch leichte Fraktion nach der Separierung im Hydrozyklon wieder in dasselbe Belebungsbecken zurückgeführt werden, aus welchem auch der in den Hydrozyklon eingeleitete Belebtschlamm abgeführt wurde, bleibt das Verhältnis der für die Deammonifikation erforderlichen Bakterienarten, nämlich der anaerob Ammonium oxidierenden Bakterien (Anammox), insbesondere Plantomyceten-Granulen, und der aerob Ammonium oxidierenden Bakterien (AOB), insbesondere Nitrosomonas, in der Anlage bzw. im biologischen System erhalten. Gleichzeitig wird durch das Entfernen des Belages der Stickstoff-umsatz gesteigert. Da die flockenartig vorliegenden aerob Ammonium oxidierenden Bakterien mehrheitlich in der spezifisch leichten Fraktion des Belebtschlammes enthalten sind, ist für eine leistungsfähige Deammonifikation und einen guten Stickstoffumsatz unerlässlich, dass neben den Planctomyceten-Granulen auch die spezifisch leichte Fraktion wieder in das Belebungsbecken zurückgeführt wird.

Im Hydrozyklon werden also die als Verbund aus mehreren Einzelbakterien vorliegenden Planctomyceten-Granulen aufgrund ihrer gegenüber den flockenartig vorliegenden aerob Ammonium oxidierenden Bakterien größeren Dichte an der aufgerauten Innenwandfläche des Hydrozyklons abgeschieden. Diese aufgeraute Innenwandfläche weist eine gegenüber einer benachbarten Innenwandfläche oder einer Innenwandfläche eines herkömmlichen Hydrozyklons größere Rauigkeit auf. Dabei kann die Innenwandfläche selbst aufgeraut sein oder eine Oberflächenbeschichtung aufweisen, welche aufgeraut ist oder die größere Rauigkeit abbildet. Durch den Kontakt mit der aufgerauten Innenwandfläche werden abrasive Kräfte in die Granulen eingeleitet, welche derart ausgebildet sind, dass der organische oder anorganische Belag auf den Granulen schonend entfernt wird, ohne dabei den Verbund aus Einzelbakterien oder die Einzelbakterien selbst zu zerstören. Nach dem Entfernen des Belages werden die Granulen über den Unterlauf des Hydrozyklons in das Belebungsbecken zurückgeführt.

Die flockenartig vorliegenden und mehrheitlich in der leichten Fraktion vorhandenen aerob Ammonium oxidierenden Bakterien (AOB) werden aufgrund ihrer im Vergleich zu den Granulen wesentlich geringeren Dichte über einen sich im Hydrozyklon ausbildenden inneren und aufwärtsgerichteten Innenwirbel aus dem Oberlauf des Hydrozyklons ausgetragen. Hierdurch gelangen diese Bakterien (AOB) nicht in einen intensiven Kontakt mit der aufgerauten Innenwandfläche im Konus, sodass diese Bakterienflocken nicht den abrasiven Kräften ausgesetzt sind und im Wesentlich unbeschädigt aus dem Hydrozyklon abgeführt und in das Belebungsbecken zurückgeführt werden können. Hierdurch können die ohnehin schlechteren Absetzeigenschaften der flockenartigen Bakterien zumindest erhalten werden. Eine Zerstörung der Flockenstruktur dagegen würde die Absetzeigenschaften derart verschlechtern, dass die für die Deammonifikation erforderlichen aerob Ammonium oxidierenden Bakterien (AOB) mit dem Schlammwasser aus dem biologischen System bzw. aus dem Belebungsbecken ausgetragen werden würden.

Durch das erfindungsgemäße Verfahren und die Entfernung des als Diffusionsbegrenzung wirkenden organischen oder anorganischen Belages von den Planctomyceten-Granulen wird der spezifische Umsatz von Stickstoff (mg N/g TS) um den Faktor 4 - 6 gesteigert.

In der Praxis hat es sich außerdem als besonders vorteilhaft erwiesen, dass der Belebtschlamm im Hydrozyklon Fliehkräften vom 30- bis 180-fachen der Erdbeschleunigung ausgesetzt wird. Bei Fliehkräften in dieser Größenordnung und daraus resultierenden hohen Geschwindigkeiten des Belebtschlammes, insbesondere der schweren Fraktion, wird der Belag auf den Planctomyceten-Granulen nahezu vollständig entfernt. Bei geringen Werten erfolgt kein bzw. nur ein sehr geringes Abtragen des Belages und bei größeren Werten werden die aus mehreren Einzelbakterien bestehenden Granulen bzw. die Einzelbakterien selbst zerstört.

Außerdem hat es sich als vorteilhaft erwiesen, dass die in dem Hydrozyklon separierte spezifisch schwere Fraktion und die spezifisch leichte Fraktion des Belebtschlammes jeweils vollständig wieder in das Belebungsbecken zurückgeführt werden. Durch die Rückführung wird gewährleistet, dass der aus dem Belebungsbecken in den Hydrozyklon eingeleitete Belebtschlamm vollständig wieder in dasselbe Belebungsbecken zurückgeführt wird und somit ein ausgewogenes Verhältnis zwischen den an der Deammonifikation beteiligten Bakterienarten (Anammox, AOB) im Belebungsbecken der Anlage zur Verfügung steht.

Eine vorteilhafte Weiterbildung des vorliegenden Verfahrens wird auch dadurch erreicht, dass während der Separierung des Belebtschlammes im Hydrozyklon die mehrheitlich die anaerob Ammonium oxidierenden Bakterien enthaltende spezifisch schwere Fraktion die in einem konischen Segment des Hydrozyklons angeordnete aufgeraute Innenwandfläche kontaktiert sowie anschließend durch einen Unterlauf des Hydrozyklons aus diesem abgeführt wird und die mehrheitlich die aerob Ammonium oxidierenden Bakterien (AOB) enthaltende spezifisch leichte Fraktion eine glatte Innenwandfläche in einem zylindrischen Segment des Hydrozyklons kontaktiert und anschließend durch einen Oberlauf des Hydrozyklons aus diesem abgeführt wird. Hierdurch wird erreicht, dass die abrasiven Kräfte ausschließlich auf die Planctomyceten-Granulen einwirken und dadurch den organischen oder anorganischen Belag entfernen, während die aerob Ammonium oxidierenden Bakterien (AOB) ausschließlich in den Kontakt mit der glatten Innwandfläche des zylindrischen Segmentes kommen. Hierdurch kann eine Zerstörung der flockenartig vorliegenden aerob Ammonium oxidierenden Bakterien verhindert werden. Die gewählte Rauigkeit der Innenwandfläche hängt vom Durchmesser des zylindrischen Segmentes des Hydrozyklons ab. Je größer der Durchmesser des zylindrischen Segmentes, desto größer sollte die gewählte Rauigkeit sein. In Versuchen hat sich gezeigt, dass die Oberfläche eine Körnung von bis zu 100 µm aufweisen sollte.

Eine besonders vorteilhafte Weiterbildung des erfindungsgemäßen Verfahrens wird auch dadurch geschaffen, dass nach einer ersten vorbestimmten Zeitspanne, in welcher in den Hydrozyklon Belebtschlamm eingeleitet und in eine spezifisch schwere Fraktion und eine spezifisch leichte Fraktion separiert wird und sowohl die schwere Fraktion als auch die leichte Fraktion in das Belebungsbecken zurückgeführt werden, dem Hydrozyklon während einer zweiten vorbestimmten Zeitspanne aus dem Belebungsbecken abgezogener Überschussschlamm statt Belebtschlamm zugeführt wird, wobei der Überschussschlamm in dem Hydrozyklon in eine spezifisch schwere Fraktion und eine spezifisch leichte Fraktion separiert wird, und ausschließlich die spezifisch schwere Fraktion in das Belebungsbecken zurückgeführt oder aufgefangen und einem Belebungsbecken einer zweiten Anlage zugeführt wird, während die spezifisch leichte Phase entsorgt wird.

Während der ersten Zeitspanne werden die in der spezifisch schweren Fraktion enthaltenen Planctomyceten-Granulen gewaschen bzw. der auf den Granulen befindliche organische oder anorganische Belag wird zumindest teilweise entfernt. Dagegen kann während der zweiten Zeitspanne durch die Entsorgung der leichten Fraktion und die Rückführung der schweren Fraktion in das Belebungsbecken der Anlage die langsamwüchsige Gruppe der anaerob Ammonium oxidierenden Bakterien (Anammox) im biologischen System bzw. im Belebungsbecken angereichert werden. Der Anteil der anaerob Ammonium oxidierenden Bakterien (Anammox) kann während der zweiten Zeitspanne derart angehoben werden, dass das Reaktionsvolumen des Beckens entsprechend verkleinert und die Prozessstabilität der Anlage gesteigert werden.

In diesem Fall hat es sich als besonders praxisnah erwiesen, dass eine Länge der ersten Zeitspanne größer ist als eine Länge der zweiten Zeitspanne. In der Praxis hat es sich als vorteilhaft erwiesen, dass die Länge der ersten Zeitspanne in etwa das 1,5- bis 4-fache der Länge der zweiten Zeitspanne beträgt. Besonders bevorzugt wird in den Hydrozyklon 70 % der Gesamtlaufzeit des Hydrozyklons Belebtschlamm und 30 % der Gesamtlaufzeit Überschussschlamm eingeleitet. Dabei wird die Länge der jeweiligen Zeitspanne in Abhängigkeit der Anzahl, der jeweiligen Größe der Hydrozyklone und der Größe des Belebungsbeckens sowie des zu erreichenden Stickstoffumsatzes der Anlage angepasst.

Erfindungsgemäß ist weiterhin vorgesehen, dass in den Hydrozyklon alternierend und fortlaufend während einer ersten Zeitspanne Belebtschlamm und während einer zweiten Zeitspanne Überschussschlamm eingeleitet wird. Das bedeutet, dass sich nach der Einleitung von Überschussschlamm während der zweiten Zeitspanne wieder eine erste Zeitspanne anschließt, in welcher dann Belebtschlamm in den Hydrozyklon eingeleitet wird.

Die zweitgenannte Aufgabe wird erfindungsgemäß mit einer deammonifizierenden Anlage gemäß den Merkmalen des Anspruches 8 gelöst. Die weitere Ausgestaltung der Erfindung ist den Unteransprüchen 9 bis 15 zu entnehmen.

Erfindungsgemäß ist also eine deammonifizierende Anlage zur Behandlung von ammoniumhaltigem Abwasser vorgesehen, bei welcher der in den Hydrozyklon eingeleitete Schlamm als Belebtschlamm ausgebildet ist und der Oberlauf des Hydrozyklons zur Rückführung der separierten spezifisch leichten Fraktion, welche mehrheitlich aerob Ammonium oxidierende Bakterien (AOB) enthält, in das Belebungsbecken strömungstechnisch mit dem Belebungsbecken verbunden ist, und bei welcher der zumindest eine Hydrozyklon ein zylindrisches Segment und ein konisches Segment aufweist, wobei eine Innenwandfläche des konischen Segmentes zumindest abschnittsweise aufgeraut ist und die aufgeraute Innenwandfläche des konischen Segmentes eine größere Rauigkeit aufweist als eine Innenwandfläche des zylindrischen Segmentes.

Durch eine derartige Ausgestaltung des Hydrozyklons und der strömungstechnischen Verbindung des Hydrozyklons mit dem Belebungsbecken wird eine verbesserte deammonifizierende Anlage zur Behandlung von ammoniumhaltigem Abwasser zur Verfügung gestellt. Mittels der erfindungsgemäßen Anlage können die sich auf den Planctomyceten-Granulen befindenden organischen oder anorganischen Beläge schonend und dabei besonders wirkungsvoll entfernt werden. Durch die Entfernung der als Diffusionsbegrenzung wirkenden Beläge wird die Umsetzung von Ammonium und Nitrit in elementaren Stickstoff durch die Planctomyceten wesentlich erleichtert.

Dadurch, dass das konische Segment des Hydrozyklons eine größere Rauigkeit aufweist als das zylindrische Segment, wird gewährleistet, dass die zur Entfernung des Belages erforderlichen abrasiven Kräfte ausschließlich in die spezifisch schwere Fraktion eingeleitet werden. Da die spezifisch leichte Fraktion aufgrund der geringeren Dichte durch den sich ausbildenden aufwärts gerichteten Innenwirbel im Hydrozyklon durch den Oberlauf ausgetragen wird, gelangt die spezifisch leichte Fraktion nicht in unmittelbaren Kontakt mit der aufgerauten Innenwandfläche im konischen Segment des Hydrozyklons. Es werden also keine abrasiven Kräfte in die leichte Fraktion eingeleitet, sodass die in der leichten Fraktion enthaltenen flockenartig vorliegenden Bakterien (AOB) nicht zerstört werden. Dies ist insbesondere wegen der wesentlich schlechteren Absetzeigenschaften dieser Schlammfraktion sehr vorteilhaft. Eine Zerstörung würde zu einer weiteren Verschlechterung der Absetzeigenschaften führen, infolge welcher diese Bakterien aus dem biologischen System bzw. dem Belebungsbecken ausgetragen werden und für die Deammonifikation nicht mehr zur Verfügung stehen würden.

Es hat sich als besonders praxisnah erwiesen, dass die Innenwandfläche des konischen Segmentes des Hydrozyklons zumindest abschnittsweise eine Rauigkeit mit einer Körnung von bis zu 100 µm aufweist. Bei einer größeren Körnung würden die im Verbund vorliegenden anaerob Ammonium oxidierenden Bakterien, nämlich die Planctomyceten-Granulen, zerstört werden. Die im Einzelfall zu wählende Rauigkeit hängt dabei insbesondere vom gewählten Durchmesser des Hydrozyklons ab. Je größer der Durchmesser des zylindrischen Segmentes des Hydrozyklons ist, desto größer sollte die gewählte Rauigkeit sein.

Eine Ausgestaltung der Erfindung sieht vor, dass die Innenwandfläche des konischen Segmentes eine die größere Rauigkeit aufweisende Oberflächenbeschichtung aufweist. Hierbei könnten die Oberflächenbeschichtung und die Innenwandfläche des konischen Segmentes einteilig ausgebildet sein oder die Oberflächenbeschichtung könnte stoffschlüssig, beispielsweise durch Kleben, mit der Innenwandfläche des konischen Segmentes verbunden sein.

Dabei hat es sich als besonders vorteilhaft erwiesen, dass der Hydrozyklon zumindest teilweise aus einem formstabilen Kunststoff und/oder die Oberflächenbeschichtung aus Aluminiumoxid besteht. Diese Ausgestaltung des Hydrozyklons gewährleistet eine einfache und reproduzierbare Herstellung des Hydrozyklons. Hierbei kann der Hydrozyklon durch Spritzgießen hergestellt werden, wobei das die Oberflächenbeschichtung bildende Aluminiumoxid vor dem Einbringen des Kunststoffs in die Form ein- bzw. auf den Kern aufgebracht wird. Während des Abkühlvorganges verbindet sich dann das Aluminiumoxid mit der Innenwandfläche des Hydrozyklons zu einem einstückigen Bauteil. Durch die Einlagerung des Aluminiumoxids in die Oberfläche des Hydrozyklons ergibt sich eine prozesssichere Fixierung des Aluminiumoxids an der Innenwandfläche. Je nach gewünschter Körnung der Oberflächenbeschichtung kann entweder die Menge und oder die Korngröße des Aluminiumoxids angepasst werden.

Eine besonders einfache Möglichkeit wird auch dadurch erreicht, dass die Oberflächenbeschichtung als Folie oder als Gewebe ausgebildet ist. Diese könnte dann stoffschlüssig auf den betreffenden Flächen des Hydrozyklons fixiert werden.

Erfindungsgemäß ist weiter vorgesehen, dass die größere Rauigkeit der Innenwandfläche des konischen Segmentes durch ein mechanisches und/oder chemisches Bearbeitungsverfahren erzeugbar ist. Hierbei kann die Rauigkeit also unmittelbar an bzw. in der Innenwandfläche des Hydrozyklons eingebracht werden.

Eine vorteilhafte Ausgestaltung der vorliegenden Erfindung sieht vor, dass die Innenwandfläche des zylindrischen Segmentes glatt ausgebildet ist. Hierdurch wird eine Zerstörung der aerob Ammonium oxidierenden Bakterien bei einem Kontakt mit der Innenwandfläche des zylindrischen Segmentes verhindert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Anlage zur Behandlung von ammoniumhaltigem Abwasser in einer vereinfachten schematischen Darstellung;
- Fig. 2: die Strömungsverhältnisse in einem in Figur 1 dargestellten Hydrozyklon in einer perspektivischen Ansicht;
- Fig. 3: den in Figur 1 dargestellten Hydrozyklon in einer Seitenansicht.

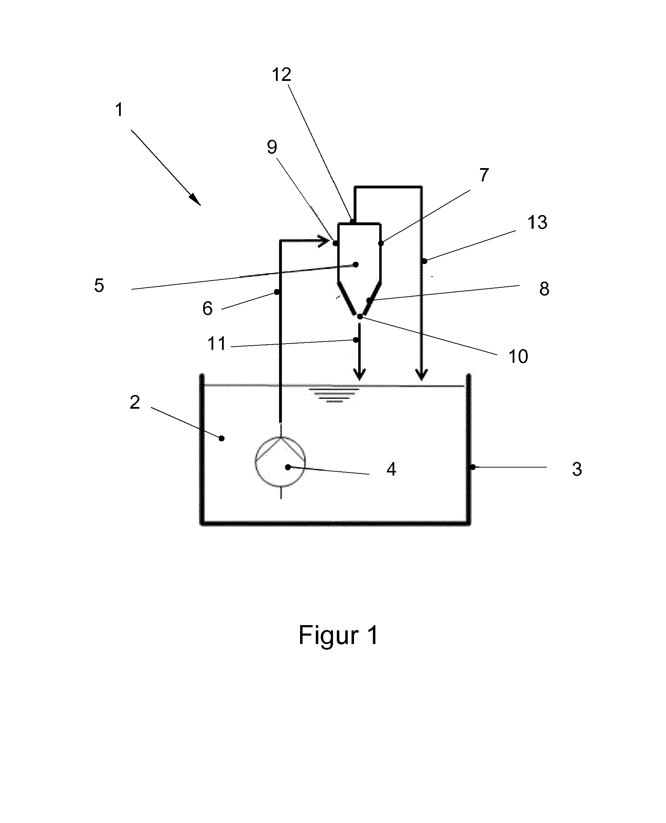

Figur 1 zeigt eine deammonifizierende Anlage 1 zur Behandlung von ammoniumhaltigem Abwasser 2. Die Anlage 1 kann als SBR-Anlage (Sequencing Batch Reactor), als konventionelle Belebungsanlage mit Nachklärung oder auch als sogenannte Membrananlage mit einer Membran zum Rückhalt der Biomasse ausgebildet sein. Die Anlage 1 weist zumindest ein Belebungsbecken 3 auf, in welchem das Abwasser 2 mit suspendierter Biomasse bzw. mit Belebtschlamm versetzt und in intensiven Kontakt gebracht wird.

Mittels einer Pumpe 4 wird ein aus einem Schlamm-Wasser-Gemisch bestehender Belebtschlamm aus dem Belebungsbecken 3 einem Hydrozyklon 5 zugeführt (Richtungspfeil 6). Der Hydrozyklon 5 weist ein zylindrisches Segment 7 und ein konisches Segment 8 auf. Das zylindrische Segment 7 hat einen Durchmesser zwischen 50 mm und 250 mm. Der Hydrozyklon 5 wird durch die Pumpe 4 mit einem Aufgabedruck beschickt, der je nach Durchmesser des zylindrischen Segmentes 7 des Hydrozyklons 5 zwischen 1,1 bar und 2,1 bar beträgt. Über einen in das zylindrische Segment 7 einmündenden Zulauf 9 wird der Belebtschlamm in den Hydrozyklon 5 eingeleitet und in diesem in eine spezifisch schwere Fraktion, welche mehrheitlich anaerob Ammonium oxidierende Bakterien (Anammox), insbesondere Planctomyceten-Granulen enthält, und in eine spezifisch leichte Fraktion, welche mehrheitlich aerob Ammonium oxidierende Bakterien (AOB), insbesondere Nitrosomonas, enthält, separiert. Die spezifisch schwere Fraktion wird durch das konische Segment 8 hindurch durch einen Unterlauf 10 aus dem Hydrozyklon 5 abgeführt und in das Belebungsbecken 3 zurückgeführt (Richtungspfeil 11). Die spezifisch leichte Fraktion wird durch einen Oberlauf 12 des Hydrozyklons 5 hindurch ebenfalls in das Belebungsbecken 3 zurückgeführt (Richtungspfeil 13). Es wird also der gesamte aus dem Belebungsbecken 3 in den Hydrozyklon 5 eingeleitete Belebtschlamm auch wieder in dasselbe Belebungsbecken 3 zurückgeführt, allerdings aufgeteilt in eine spezifisch schwere Fraktion und eine spezifisch leichte Fraktion. Dabei umfasst die spezifisch schwere Fraktion ca. 80 % und die spezifisch leichte Fraktion ca. 20 % des in den Zulauf 9 des Hydrozyklons 5 eingeleiteten Belebtschlammvolumens.

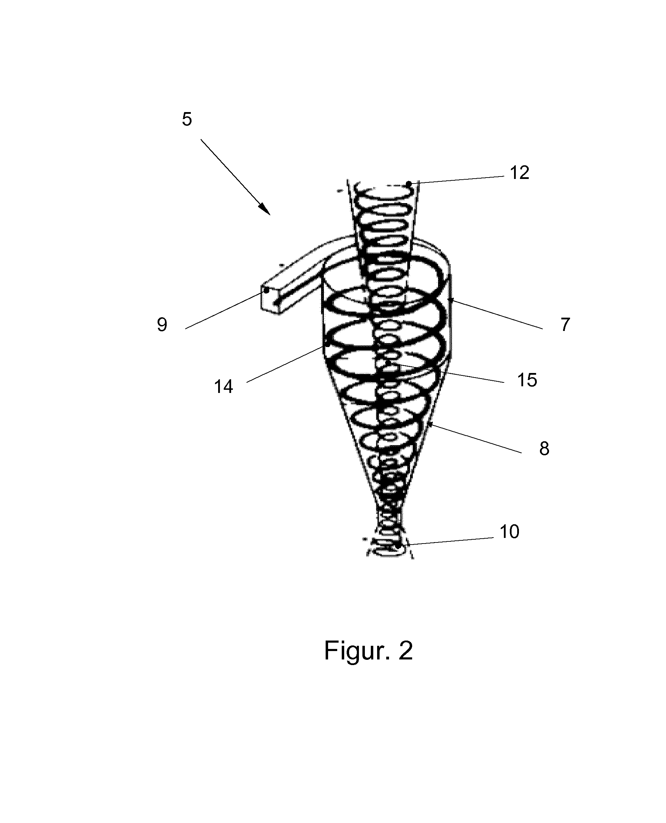

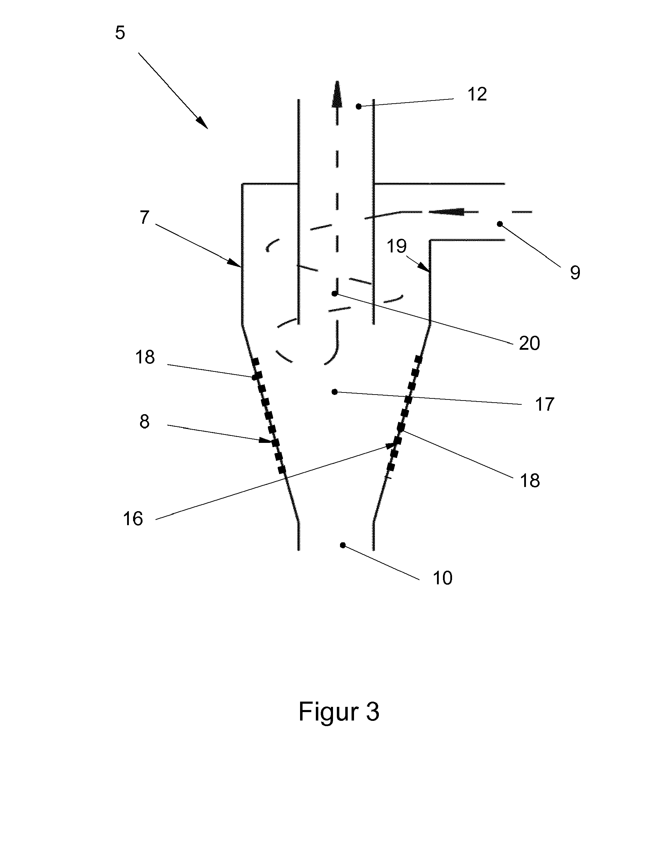

Figur 2 veranschaulicht die Strömungsverhältnisse in dem in Figur 1 dargestellten Hydrozyklon 5 und Figur 3 zeigt den Hydrozyklon 5 in einer Seitenansicht. Der Belebtschlamm aus dem Belebungsbecken 3 wird über den Zulauf 9 tangential in das zylindrische Segment 7 des Hydrozyklons 5 eingeleitet. Hierdurch wird der Belebtschlamm auf eine Kreisbahn gezwungen und strömt in einem abwärts gerichteten Außenwirbel 14 nach unten. Durch eine Verjüngung in dem konischen Segment 8 des Hydrozyklons 5 kommt es zu einer Verdrängung von Volumen nach innen und zu einem Aufstau im unteren Bereich des konischen Segmentes 8, was zur Bildung eines inneren, aufwärtsgerichteten Innenwirbels 15 führt, der durch den Oberlauf 12 aus dem Hydrozyklon 5 entweicht. Die spezifisch schwere Fraktion wird an einer Innenwandfläche 16 des Hydrozyklons 5 abgeschieden und durch den Unterlauf 10 aus dem Hydrozyklon 5 abgeführt, während die spezifisch leichtere Fraktion durch den Oberlauf 12 aus dem Hydrozyklon 5 abgeführt wird. Der Belebtschlamm wird in dem dargestellten Hydrozyklon 5 Fliehkräften vom 30- bis 180-fachen der Erdbeschleunigung g ausgesetzt.

Die dem Innenraum 17 des Hydrozyklons 5 zugewandte Innenwandfläche 16 des konischen Segmentes 8 weist eine aufgeraute Oberflächenbeschichtung 18 auf, welche eine größere Rauigkeit aufweist als eine ebenfalls dem Innenraum 17 des Hydrozyklons 5 zugewandte Innenwandfläche 19 des zylindrischen Segmentes 7. Die Oberflächenbeschichtung 18 weist eine Körnung von bis zu 100 µm auf und wird beispielsweise durch Aluminiumoxid gebildet, welches einteilig mit dem Kunststoffmaterial des Hydrozyklons 5 verbunden ist. Die gewählte Rauigkeit der Oberflächenbeschichtung 18 hängt vom Durchmesser des gewählten Hydrozyklons 5 ab. Je größer der Durchmesser des zylindrischen Segmentes 7 ist, desto größer sollte die gewählte Rauigkeit der Oberflächenbeschichtung 18 sein.

Bei der Deammonifikation des ammoniumhaltigen Abwassers 2 im Belebungsbecken 3 der Anlage 1 wird zunächst mittels aerob oxidierender Bakterien (AOB) Ammonium zu Nitrit umgesetzt. Anschließend wird mittels anaerob Ammonium oxidierender Bakterien (Anammox), insbesondere mittels Planctomyceten, Ammonium und Nitrit in elementaren Stickstoff umgesetzt. Die Planctomyceten liegen hierbei als aus mehreren Einzelbakterien zusammengesetzte Granulen vor, welche gegenüber den flockenartig vorliegenden anaerob Ammonium oxidierenden Bakterien (AOB) eine wesentlich größere Dichte aufweisen. Der im Belebungsbecken 3 befindliche Belebtschlamm wird also durch den Zulauf 9 tangential in den Hydrozyklon 5 eingeleitet. Im Hydrozyklon 5 wird der Belebtschlamm dann aufgrund der vorherrschenden Flieh- und Strömungskräfte in eine spezifisch schwere Fraktion, welche die eine größere Dichte aufweisenden anaerob Ammonium oxidierenden Bakterien (Planctomyceten-Granulen) enthält, und eine spezifisch leichte Fraktion, welche mehrheitlich die aerob oxidierenden (flockenartigen) Bakterien enthält, separiert. Durch den Kontakt und eine Relativbewegung zwischen den sich schnell bewegenden anaerob Ammonium oxidierenden Bakterien (Anammox) in der spezifisch schweren Fraktion mit einer ortsfesten aufgerauten Innenwandfläche 16 des Hydrozyklons 5 wird ein auf den Planctomyceten-Granulen angeordneter organischer und/oder anorganischer Belag zumindest teilweise entfernt, bevor die schwere Fraktion dann durch den Unterlauf 10 aus dem Hydrozyklon 5 abgeführt wird. Die spezifisch leichte Fraktion dagegen wird ohne nennenswerten Kontakt mit der aufgerauten Innenwandfläche 16 im konischen Segment 8 mittels des entstehenden Innenwirbels 15 durch den Oberlauf 12 aus dem Hydrozyklon 5 abgeführt (gestrichelt dargestellter Richtungspfeil 20 in Figur 3). Sowohl die spezifisch schwere Fraktion als auch die spezifisch leichte Fraktion des Belebtschlammes werden nach der Separierung im Hydrozyklon 5 wieder vollständig in das Belebungsbecken 3 zurückgeführt.

Die abrasiven Kräfte bzw. der abrasive Effekt kann durch eine Kombination der Größe des Hydrozyklons 5, insbesondere des Durchmessers des zylindrischen Abschnittes 7, der Rauigkeit der Innenwandfläche 16 im konischen Segment 8 und der Laufzeit des Hydrozyklons 5 in Verbindung mit der Größe des biologischen Systems bzw. des Volumens des Belebungsbeckens 3 optimal eingestellt werden.

## Patentansprüche

1. Verfahren zur Behandlung von ammoniumhaltigem Abwasser (2) in einer zumindest ein Belebungsbecken (3) aufweisenden deammonifizierenden Anlage (1), bei welchem zunächst mittels aerob oxidierender Bakterien (AOB) Ammonium zu Nitrit umgesetzt wird und anschließend mittels anaerob Ammonium oxidierender Bakterien (Anammox), insbesondere mittels Planctomyceten, Ammonium und Nitrit in elementaren Stickstoff umgesetzt werden und bei welchem Schlamm aus dem Belebungsbecken (3) einem Hydrozyklon (5) zugeführt und in diesem in eine spezifisch schwere Fraktion, welche mehrheitlich die anaerob Ammonium oxidierenden Bakterien (Anammox) enthält, und in eine spezifisch leichte Fraktion separiert wird, wobei die spezifisch schwere Fraktion in das Belebungsbecken (3) zurückgeführt wird, **dadurch gekennzeichnet, dass** zumindest zeitweise Belebtschlamm aus dem Belebungsbecken (3) in den Hydrozyklon (5) eingeleitet wird und dass nach der Separierung des Belebtschlammes im Hydrozyklon (5) sowohl die spezifisch schwere Fraktion als auch die spezifisch leichte Fraktion, welche mehrheitlich die aerob Ammonium oxidierenden Bakterien (AOB) enthält, wieder in das zumindest eine Belebungsbecken (3) der Anlage (1) zurückgeführt werden, wobei während der Separierung des Belebtschlammes im Hydrozyklon (5) die gegenüber den aerob Ammonium oxidierenden Bakterien (AOB) eine größere Dichte aufweisenden anaerob Ammonium oxidierenden Bakterien (Anammox) durch die Flieh- und Strömungskräfte im Hydrozyklon (5) an einer aufgerauten Innenwandfläche (16) des Hydrozyklons (5) abgeschieden werden und durch eine Relativbewegung zwischen den sich schnell bewegenden anaerob Ammonium oxidierenden Bakterien (Anammox) und der ortsfesten aufgerauten Innenwandfläche (16) des Hydrozyklons (5) abrasive Kräfte erzeugt werden, durch welche ein auf den Ammonium oxidierenden Bakterien (Anammox), insbesondere Planctomyceten-Granulen, vorhandener organischer oder anorganischer Belag zumindest teilweise entfernt wird.

2. Verfahren nach Anspruch 1, **dadurch gekennzeichnet, dass** die in dem Hydrozyklon (5) separierte spezifisch schwere Fraktion und die spezifisch leichte Fraktion des Belebtschlammes jeweils vollständig wieder in dasselbe Belebungsbecken (3) zurückgeführt werden.

3. Verfahren nach den Ansprüchen 1 oder 2, **dadurch gekennzeichnet, dass** während der Separierung des Belebtschlammes im Hydrozyklon (5) die mehrheitlich die anaerob Ammonium oxidierenden Bakterien enthaltende spezifisch schwere Fraktion die in einem konischen Segment (8) des Hydrozyklons (5) angeordnete aufgeraute Innenwandfläche (16) kontaktiert und anschließend durch einen Unterlauf (10) des Hydrozyklons (5) aus diesem abgeführt wird und die mehrheitlich die aerob Ammonium oxidierenden Bakterien (AOB) enthaltende spezifisch leichte Fraktion eine glatte Innenwandfläche (19) in einem zylindrischen Segment (7) des Hydrozyklons (5) kontaktiert und anschließend durch einen Oberlauf (12) des Hydrozyklons (5) aus diesem abgeführt wird.

4. Verfahren nach zumindest einem der vorangehenden Ansprüche, **dadurch gekennzeichnet, dass** nach einer ersten vorbestimmten Zeitspanne, in welcher in den Hydrozyklon (5) Belebtschlamm eingeleitet und in eine spezifisch schwere Fraktion und eine spezifisch leichte Fraktion separiert wird und sowohl die schwere Fraktion als auch die leichte Fraktion in das Belebungsbecken (3) zurückgeführt werden, dem Hydrozyklon (5) während einer zweiten vorbestimmten Zeitspanne aus dem Belebungsbecken (3) abgezogener Überschussschlamm statt Belebtschlamm zugeführt wird, wobei der Überschussschlamm in dem Hydrozyklon (5) in eine spezifisch schwere Fraktion und eine spezifisch leichte Fraktion separiert wird, und ausschließlich die spezifisch schwere Fraktion in das Belebungsbecken (3) zurückgeführt oder aufgefangen und einem Belebungsbecken einer zweiten Anlage zugeführt wird, während die spezifisch leichte Phase entsorgt wird.

5. Verfahren nach Anspruch 4 **dadurch gekennzeichnet, dass** eine Länge der ersten Zeitspanne größer ist als eine Länge der zweiten Zeitspanne.

6. Verfahren nach anspruch 5 **dadurch gekennzeichnet, dass** die Länge der ersten Zeitspanne in etwa das 1,5- bis 4-fache der Länge der zweiten Zeitspanne beträgt.

7. Verfahren nach zumindest einem der vorhergehenden Ansprüche, **dadurch gekennzeichnet, dass** in den Hydrozyklon (5) alternierend und fortlaufend während einer ersten Zeitspanne Belebtschlamm und während einer zweiten Zeitspanne Überschussschlamm eingeleitet wird.

8. Deammonifizierende Anlage (1) zur Behandlung von ammoniumhaltigem Abwasser (2) mit zumindest einem Belebungsbecken (3) und mit zumindest einem Hydrozyklon (5) zur Separierung von Schlamm aus dem Belebungsbecken (3) in eine spezifisch schwere Fraktion, welche mehrheitlich anaerob Ammonium oxidierende Bakterien (Anammox) enthält, und in eine spezifisch leichte Fraktion, wobei der Hydrozyklon (5) einen strömungstechnisch mit dem Belebungsbecken (3) verbundenen Zulauf (9) zur Einleitung des Schlammes, einen strömungstechnisch mit dem Belebungsbecken (3) verbundenen Unterlauf (10) zur Rückführung der separierten spezifisch schweren Fraktion in das Belebungsbecken (3) und einen Oberlauf (12) zum Abführen der separierten spezifisch leichten Fraktion aus dem Hydrozyklon (5) aufweist, **dadurch gekennzeichnet, dass** der in den Hydrozyklon (5) eingeleitete Schlamm als Belebtschlamm ausgebildet ist und der Oberlauf (12) des Hydrozyklons (5) zur Rückführung der separierten spezifisch leichten Fraktion, welche mehrheitlich aerob Ammonium oxidierende Bakterien (AOB) enthält, in das Belebungsbecken (3) strömungstechnisch mit dem Belebungsbecken (3) verbunden ist, und dass der zumindest eine Hydrozyklon (5) ein zylindrisches Segment (7) und ein konisches Segment (8) aufweist, wobei eine Innenwandfläche (16) des konischen Segmentes (8) zumindest abschnittsweise aufgeraut ist und die aufgeraute Innenwandfläche (16) des konischen Segmentes (8) eine größere Rauigkeit aufweist als eine Innenwandfläche (19) des zylindrischen Segmentes (7).

9. Anlage (1) nach Anspruch 8, **dadurch gekennzeichnet, dass** die aufgeraute Innenwandfläche (16) des konischen Segmentes (8) des Hydrozyklons (5) zumindest abschnittsweise eine Rauigkeit mit einer Körnung von bis zu 100 µm aufweist.

10. Anlage (1) nach den Ansprüchen 8 oder 9, **dadurch gekennzeichnet, dass** die Innenwandfläche (16) des konischen Segmentes (8) eine die größere Rauigkeit aufweisende Oberflächenbeschichtung (18) aufweist.

11. Anlage (1) nach Anspruch 10, **dadurch gekennzeichnet, dass** die Oberflächenbeschichtung (18) und die Innenwandfläche (16) des konischen Segmentes (8) einteilig ausgebildet sind oder dass die Oberflächenbeschichtung (18) stoffschlüssig mit der Innenwandfläche (16) des konischen Segmentes (8) verbunden ist.

12. Anlage (1) nach zumindest einem der Ansprüche 8 bis 11, **dadurch gekennzeichnet, dass** der Hydrozyklon (5) zumindest teilweise aus einem formstabilen Kunststoff und/oder die Oberflächenbeschichtung (18) aus Aluminiumoxid besteht.

13. Anlage (1) nach zumindest einem der Ansprüche 10 bis 12, **dadurch gekennzeichnet, dass** die Oberflächenbeschichtung (18) als Folie oder als Gewebe ausgebildet ist.

14. Anlage (1) nach zumindest einem der Ansprüche 8 bis 13, **dadurch gekennzeichnet, dass** die größere Rauigkeit der Innenwandfläche (16) des konischen Segmentes (8) durch ein mechanisches und/oder chemisches Bearbeitungsverfahren erzeugbar ist.

15. Anlage (1) nach zumindest einem der Ansprüche 8 bis 14, **dadurch gekennzeichnet, dass** die Innenwandfläche (19) des zylindrischen Segmentes (7) glatt ausgebildet ist.

## Claims

1. Process for treating ammonium-containing wastewater (2) in a deammonification facility (1) having at least one activation tank (3), in which first ammonium is reacted to form nitrite by means of aerobically oxidizing bacteria (AOB) and then ammonium and nitrite are reacted to form elemental nitrogen by means of anaerobically ammonium-oxidizing bacteria (anammox), in particular by means of Planctomycetes, and in which sludge from the activation tank (3) is fed to a hydrocyclone (5) and therein is separated into a dense fraction which predominantly contains the anaerobically ammonium-oxidizing bacteria (anammox), and into a light fraction, wherein the dense fraction is returned to the activation tank (3) **characterized in that** activated sludge from the activation tank (3) is introduced at least intermittently into the hydrocyclone (5) and **in that**, after the separation of the activated sludge in the hydrocyclone (5) both the dense fraction and the light fraction which predominantly contains the aerobically ammonium-oxidizing bacteria (AOB) are returned to the at least one activation tank (3) of the facility (1), wherein during the separation of the activated sludge in the hydrocyclone (5), the anaerobically ammonium-oxidizing bacteria (anammox) having a higher density than the aerobically ammonium-oxidizing bacteria (AOB) are sedimented on a roughened internal wall surface (16) of the hydrocyclone (5) by the centrifugal and hydrodynamic forces in the hydrocyclone (5) and abrasive forces are generated by a relative motion between the rapidly moving anaerobically ammonium-oxidizing bacteria (anammox) and the stationary roughened internal wall surface (16) of the hydrocyclone (5), via which abrasive forces an organic or inorganic plaque present on the ammonium-oxidizing bacteria (anammox), in particular Planctomycetes granules, is at least partly removed.

2. Process according to Claim 1, **characterized in that** the dense fraction and the light fraction of the activated sludge that are separated in the hydrocyclone (5) are each completely returned to the same activation tank (3).

3. Process according to Claims 1 or 2, **characterized in that** during the separation of the activated sludge in the hydrocyclone (5), the dense fraction predominantly containing the anaerobically ammonium-oxidizing bacteria contacts the roughened internal wall surface (16) arranged in a conical segment (8) of the hydrocyclone (5) and then is removed therefrom via an underflow (10) of the hydrocyclone (5) and the light fraction predominantly containing the aerobically ammonium-oxidizing bacteria (AOB) contacts a smooth internal wall surface (19) in a cylindrical segment (7) of the hydrocyclone (5) and is then removed therefrom via an overflow (12) of the hydrocyclone (5).

4. Process according to at least one of the preceding claims, **characterized in that,** after a first predetermined time period in which activated sludge is introduced into the hydrocyclone (5) and is separated into a dense fraction and a light fraction and both the dense fraction and the light fraction are returned to the activation tank (3), excess sludge taken off during a second predetermined time period from the activation tank (3) is fed to the hydrocyclone (5) instead of activated sludge, wherein the excess sludge is separated in the hydrocyclone (5) into a dense fraction and a light fraction, and solely the dense fraction is returned to the activation tank (3) or is collected and fed to an activation tank of a second facility, while the light phase is disposed of.

5. Process according to Claim 4, **characterized in that** a length of the first time period is greater than a length of the second time period.

6. Process according to Claim 5, **characterized in that** the length of the first time period is roughly 1.5 to 4 times the length of the second time period.

7. Process according to at least one of the preceding claims, **characterized in that,** alternately and consecutively, during a first time period, activated sludge is introduced into the hydrocyclone (5), and during a second time period, excess sludge is introduced.

8. Deammonification facility (1) for treating ammonium-containing wastewater (2) having at least one activation tank (3) and having at least one hydrocyclone (5) for separating sludge from the activation tank (3) into a dense fraction which predominantly contains anaerobically ammonium-oxidizing bacteria (anammox), and a light fraction, wherein the hydrocyclone (5) has a feed that is flow-connected to the activation tank (3) for introducing the sludge, an underflow (10) flow-connected to the activation tank (3) for returning the separated dense fraction to the activation tank (3) and an overflow (12) for removing the separated light fraction from the hydrocyclone (5), **characterized in that** the sludge that is introduced into the hydrocyclone (5) is formed as activated sludge and the overflow (12) of the hydrocyclone (5) for returning the separated light fraction which predominantly contains aerobically ammonium-oxidizing bacteria (AOB) to the activation tank (3) is flow-connected to the activation tank (3), and **in that** the at least one hydrocyclone (5) has a cylindrical segment (7) and a conical segment (8), wherein an internal wall surface (16) of the conical segment (8) is roughened at least in sections and the roughened internal wall surface (16) of the conical segment (8) has a greater roughness than an internal wall surface (19) of the cylindrical segment (7).

9. Facility (1) according to Claim 8, **characterized in that** the roughened internal wall surface (16) of the conical segment (8) of the hydrocyclone (5) has a roughness having a granularity of up to 100 µm at least in sections.

10. Facility (1) according to Claim 8 or 9, **characterized in that** the internal wall surface (16) of the conical segment (8) has a surface coating (18) having the greater roughness.

11. Facility (1) according to Claim 10, **characterized in that** the surface coating (18) and the internal wall surface (16) of the conical segment (8) are formed in one piece or **in that** the surface coating (18) is firmly bonded to the internal wall surface (16) of the conical segment (8).

12. Facility (1) according to at least one of Claims 8 to 11, **characterized in that** the hydrocyclone (5) consists at least in part of a dimensionally-stable plastic and/or the surface coating (18) consists of aluminium oxide.

13. Facility (1) according to at least one of Claims 10 to 12, **characterized in that** the surface coating (18) is constructed as a film or as a woven fabric.

14. Facility (1) according to at least one of Claims 8 to 13, **characterized in that** the greater roughness of the internal wall surface (16) of the conical segment (8) can be generated by a mechanical and/or chemical processing technique.

15. Facility (1) according to at least one of Claims 8 to 14, **characterized in that** the internal wall surface (19) of the cylindrical segment (7) is constructed so as to be smooth.

## Revendications

1. Procédé de traitement d'une eau usée contenant de l'ammonium (2) dans une unité de désammonification (1) comprenant au moins un bassin d'activation (3), selon lequel l'ammonium est tout d'abord transformé en nitrite au moyen de bactéries oxydantes aérobies (AOB), puis l'ammonium et le nitrite sont transformés en azote élémentaire au moyen de bactéries oxydant l'ammonium anaérobies (Anammox), notamment au moyen de planctomycètes, et selon lequel une boue issue du bassin d'activation (3) est introduite dans un hydrocyclone (5) et est séparée dans celui-ci en une fraction spécifiquement lourde, qui contient majoritairement les bactéries oxydant l'ammonium anaérobies (Anammox), et en une fraction spécifiquement légère, la fraction spécifiquement lourde étant recyclée dans le bassin d'activation (3), **caractérisé en ce qu'**une boue activée issue du bassin d'activation (3) est introduite au moins par intermittence dans l'hydrocyclone (5) et **en ce qu'**après la séparation de la boue activée dans l'hydrocyclone (5), aussi bien la fraction spécifiquement lourde que la fraction spécifiquement légère, qui contient majoritairement les bactéries oxydant l'ammonium aérobies (AOB), sont recyclées dans le ou les bassins d'activation (3) de l'unité (1), les bactéries oxydant l'ammonium anaérobies (Anammox), qui présente une densité plus élevée que les bactéries oxydant l'ammonium aérobies (AOB), se déposant pendant la séparation de la boue activée dans l'hydrocyclone (5) en raison des forces centrifuges et d'écoulement dans l'hydrocyclone (5) sur une surface de paroi intérieure rugosifiée (16) de l'hydrocyclone (5), et des forces abrasives étant générées par un mouvement relatif entre les bactéries oxydant l'ammonium anaérobies (Anammox) qui se déplacent rapidement et la surface de paroi intérieure rugosifiée fixe (16) de l'hydrocyclone, grâce auxquelles un dépôt organique ou inorganique présent sur les bactéries oxydant l'ammonium (Anammox), notamment les granulés de planctomycètes, est au moins partiellement éliminé.

2. Procédé selon la revendication 1, **caractérisé en ce que** la fraction spécifiquement lourde et la fraction spécifiquement légère de la boue activée séparées dans l'hydrocyclone (5) sont chacune recyclées en totalité dans le même bassin d'activation (3).

3. Procédé selon les revendications 1 ou 2, **caractérisé en ce que**, pendant la séparation de la boue activée dans l'hydrocyclone (5), la fraction spécifiquement lourde qui contient majoritairement les bactéries oxydant l'ammonium anaérobies rentre en contact avec la surface de paroi intérieure rugosifiée (16) agencée dans un segment conique (8) de l'hydrocyclone (5), puis est déchargée de celui-ci par une sortie inférieure (10) de l'hydrocyclone (5), et la fraction spécifiquement légère qui contient majoritairement les bactéries oxydant l'ammonium aérobies (AOB) rentre en contact avec une surface de paroi intérieure lisse (19) dans un segment cylindrique (7) de l'hydrocyclone (5), puis est déchargée de celui-ci par une sortie supérieure (12) de l'hydrocyclone (5).

4. Procédé selon au moins l'une quelconque des revendications précédentes, **caractérisé en ce qu'**après une première période prédéterminée, pendant laquelle une boue activée est introduite dans l'hydrocyclone (5) et séparée en une fraction spécifiquement lourde et une fraction spécifiquement légère, et aussi bien la fraction lourde que la fraction légère sont recyclées dans le bassin d'activation (3), une boue excédentaire soutirée du bassin d'activation est introduite dans l'hydrocyclone (5) pendant une seconde période prédéterminée au lieu de la boue activée, la boue excédentaire étant séparée dans l'hydrocyclone (5) en une fraction spécifiquement lourde et une fraction spécifiquement légère, et seule la fraction spécifiquement lourde étant recyclée dans le bassin d'activation (3) ou collectée et introduite dans un bassin d'activation (3) d'une seconde unité, tandis que la phase spécifiquement légère est éliminée.

5. Procédé selon la revendication 4, **caractérisé en ce qu'**une longueur de la première période est supérieure à une longueur de la seconde période.

6. Procédé selon la revendication 5, **caractérisé en ce que** la longueur de la première période est d'environ 1,5 à 4 fois la longueur de la seconde période.

7. Procédé selon au moins l'une quelconque des revendications précédentes, **caractérisé en ce qu'**en alternance et en continu, une boue activée est introduite dans l'hydrocyclone (5) pendant une première période et une boue excédentaire pendant une seconde période.

8. Unité de désammonification (1) pour le traitement d'une eau usée contenant de l'ammonium (2), comprenant au moins un bassin d'activation (3) et au moins un hydrocyclone (5) pour la séparation de la boue issue du bassin d'activation (3) en une fraction spécifiquement lourde, qui contient majoritairement les bactéries oxydant l'ammonium anaérobies (Anammox), et en une fraction spécifiquement légère, l'hydrocyclone (5) comprenant une entrée (9) présentant une connexion fluidique avec le bassin d'activation (3) pour l'introduction de la boue, une sortie inférieure (10) présentant une connexion fluidique avec le bassin d'activation (3) pour le recyclage de la fraction spécifiquement lourde séparée dans le bassin d'activation (3) et une sortie supérieure (12) pour le déchargement de la fraction spécifiquement légère séparée de l'hydrocyclone (5), **caractérisée en ce que** la boue introduite dans l'hydrocyclone (5) est configurée sous la forme d'une boue activée et la sortie supérieure (12) de l'hydrocyclone (5) présente une connexion fluidique avec le bassin d'activation (3) pour le recyclage de la fraction spécifiquement légère séparée, qui contient majoritairement des bactéries oxydant l'ammonium aérobies (AOB), dans le bassin d'activation (3), et **en ce que** le ou les hydrocyclones (5) comprennent un segment cylindrique (7) et un segment conique (8), une surface de paroi intérieure (16) du segment conique (8) étant rugosifiée au moins par sections et la surface de paroi intérieure rugosifiée (16) du segment conique (8) présentant une rugosité plus élevée qu'une surface de paroi intérieure (19) du segment cylindrique (7).

9. Unité (1) selon la revendication 8, **caractérisée en ce que** la surface de paroi inférieure rugosifiée (16) du segment conique (8) de l'hydrocyclone (5) présente au moins en sections une rugosité d'une granulométrie de jusqu'à 100 µm.

10. Unité (1) selon les revendications 8 ou 9, **caractérisée en ce que** la surface de paroi intérieure (16) du segment conique (8) présente un revêtement de surface (18) présentant la rugosité plus élevée.

11. Unité (1) selon la revendication 10, **caractérisée en ce que** le revêtement de surface (18) et la surface de paroi intérieure (16) du segment conique (8) sont formés d'un seul tenant ou **en ce que** le revêtement de surface (18) est relié avec liaison de matière avec la surface de paroi intérieure (16) du segment conique (8).

12. Unité (1) selon au moins l'une quelconque des revendications 8 à 11, **caractérisée en ce que** l'hydrocyclone (5) est au moins partiellement constitué d'un plastique à forme stable et/ou le revêtement de surface (18) d'oxyde d'aluminium.

13. Unité (1) selon au moins l'une quelconque des revendications 10 à 12, **caractérisée en ce que** le revêtement de surface (18) est configuré sous la forme d'un film ou d'un tissu.

14. Unité (1) selon au moins l'une quelconque des revendications 8 à 13, **caractérisée en ce que** la rugosité plus élevée de la surface de paroi intérieure (16) du segment conique (8) peut être formée par un procédé de traitement mécanique et/ou chimique.

15. Unité (1) selon au moins l'une quelconque des revendications 8 à 14, **caractérisée en ce que** la surface de paroi intérieure (19) du segment cylindrique (7) est configurée sous forme lisse.
